# DEMANDE DE BREVET EUROPEEN

(11) **EP 1 298 167 A1**
(43) Date de publication de la demande: **02.04.2003**
(21) Numéro de dépôt: 01203685.1
(22) Date de dépôt: 26.09.2001
(51) Int. Cl.: C08L 23/14

(54) **Compositions à base de polymère du propylène et feuilles multicouches thermoscellables les contenant**

(71) Demandeur: POLYPROPYLENE BELGIUM (Naamloze Vennootschap), 2040 Antwerpen (BE)
(72) Inventeur: Lhost, Olivier, 7021 Havre (BE); Coppini, Valério, 1160 Bruxelles (BE); Cuypers, Hervé, 1341 Ceroux-Mousty (BE)
(74) Mandataire: Smith, Julian Philip Howard

(57) **Abrégé**

Compositions à base de polymère du propylène ayant une température de scellage inférieure à 80°C, ledit polymère du propylène contenant moins de 1 % en poids d'unités monomériques dérivées de l'éthylène par rapport au poids total du polymère du propylène et feuilles multicouches thermoscellables comprenant ces compositions.

## Description

La présente invention concerne des compositions à base de polymère du propylène ayant une température de scellage inférieure à 80°C. Elle concerne plus particulièrement des compositions contenant deux copolymères statistiques du propylène de composition différente et présentant à la fois une température de scellage très basse et une large plage de hot tack. La présente invention concerne également des feuilles multicouches thermoscellables dont au moins une couche thermoscellable comprend lesdites compositions.

Il est connu d'utiliser des résines acryliques ou des copolymères du chlorure de vinylidène pour la fabrication des couches thermoscellables (appelées "couches de scellage") de feuilles multicouches pour l'emballage dont la couche centrale est à base d'un polymère cristallin du propylène et qui sont généralement orientées biaxialement (appelées "films BOPP"), scellant à très basse température.

Les inconvénients de ces résines acryliques ou ces copolymères du chlorure de vinylidène sont leur prix de revient auquel vient s'ajouter le prix de l'étape d'enduction sur la couche centrale du film biorienté. En outre, ils ne sont pas compatibles avec le polypropylène qui constitue essentiellement la couche centrale du film biorienté, et dès lors rendent impossible le recyclage des films BOPP ainsi enduits.

Il est connu également d'utiliser des co- ou des terpolymères statistiques du propylène contenant de l'éthylène et du 1-butène. Un inconvénient de ces co- et terpolymères statistiques réside dans le fait que pour atteindre une température de scellage très basse, il est nécessaire d'incorporer beaucoup de comonomères. La basse température de fusion qui en découle, engendre ainsi des problèmes de collage sur les rouleaux de ces machines de fabrication des feuilles et/ou lors du stockage des emballages fabriqués avec ces feuilles, par exemple, dans les distributeurs automatiques.

On a tenté de remédier à ces inconvénients en utilisant des compositions contenant deux copolymères du propylène contenant des quantités variables d'unités monomériques dérivées de l'éthylène et/ou du 1-butène.

La demande de brevet GB 2116989 décrit une composition à base de copolymères du propylène ayant une température de scellage inférieure à 80°C. Toutefois, cette composition, contenant plus de 1 % en poids d'unités monomériques dérivées de l'éthylène, présente de mauvaises propriétés optiques et une faible résistance au blocking.

Les demandes de brevet EP-A-0679686 et EP-A-0203727 décrivent des compositions à base de copolymères du propylène ayant une température de scellage inférieure à 80°C. Cependant, ces compositions sont obtenues par mélange de deux copolymères statistiques du propylène, dont au moins un est très riche en comonomères. Il est connu que ce dernier a une mauvaise morphologie, ou encore est obtenu avec un rendement catalytique économiquement inacceptable.

On a maintenant trouvé des compositions à base de polymère du propylène ayant une température de scellage inférieure à 80°C et permettant de résoudre de manière satisfaisante l'ensemble des problèmes énumérés ci-dessus.

La présente invention concerne à cet effet, à titre principal, des compositions à base de polymère du propylène ayant une température de scellage inférieure à 80°C, ledit polymère du propylène contenant moins de 1 % en poids d'unités monomériques dérivées de l'éthylène par rapport au poids total du polymère du propylène.

Dans le cadre de la présente invention, la température de scellage (dénommée ci-après plus brièvement Tsc) est déterminée comme suit : deux films coextrudés et biorientés de 25 µm d'épaisseur sont mis entre les mâchoires d'une soudeuse OTTO BRUGGER HSG/C à deux mâchoires chauffées de telle manière que les couches comprenant la composition selon l'invention soient scellées l'une sur l'autre. Une pression de 3 bars est appliquée pendant une seconde. Après refroidissement, un test de traction à une vitesse de 100 mm/min est effectué. La Tsc est la température, exprimée en °C, à laquelle la soudure présente une résistance de 100 g/cm. Les films coextrudés biorientés sont constitués d'une couche principale d'homopolymère du propylène (MFI : 2,8 g/10 min) de 23 µm d'épaisseur et d'une couche de la composition selon l'invention de 1 µm d'épaisseur. Pour fabriquer ces feuilles, on pratique un étirage dans le sens longitudinal et un étirage dans le sens transversal.

La Tsc des compositions selon l'invention est avantageusement d'au moins 50°C, plus particulièrement d'au moins 55°C et tout particulièrement d'au moins 60°C. Des compositions ayant des Tsc d'au plus 79°C sont tout particulièrement préférées.

Le polymère du propylène utilisé dans les compositions selon l'invention a généralement une teneur en éthylène, déterminée par spectrométrie infrarouge selon la méthode décrite en rapport avec les exemples, ne dépassant pas 0,83 % en poids, de préférence d'au plus 0,5 % en poids, plus particulièrement d'au plus 0,3 % en poids par rapport au poids total du polymère du propylène. Des polymères du propylène ne contenant pas d'éthylène sont tout particulièrement préférés.

Des compositions à base de polymère de propylène préférées sont celles comprenant :
- de 35 à 68 % en poids d'un copolymère statistique du propylène (copolymère (A)) contenant de 14 à 30 % en poids d'unités monomériques dérivées du 1-butène et de 0 à 0,5 % en poids d'unités monomériques dérivées de l'éthylène par rapport au poids total du copolymère (A), et
- de 65 à 32 % en poids d'un copolymère statistique du propylène (copolymère (B)) contenant de 35 à 55 % en poids d'unités monomériques dérivées du 1-butène et de 0 à 1 % en poids d'unités monomériques dérivées de l'éthylène par rapport au poids total du copolymère (B).

Les termes "unités monomériques dérivées du propylène", "unités monomériques dérivées du 1-butène" et "unités monomériques dérivées de l'éthylène" seront remplacés respectivement ci-après par les abréviations "C3", "C4" et "C2".

Les compositions contenant des quantités plus élevées de copolymère (A) ont généralement une Tsc trop élevée tandis que des quantités plus faibles de copolymère (A) conduisent généralement à des compositions présentant des problèmes de collage sur les rouleaux utilisés lors de la fabrication des feuilles et/ou lors du stockage des emballages fabriqués avec ces feuilles. Les compositions contenant des teneurs plus élevées en C4 dans le copolymère (A) donnent le plus souvent des problèmes de morphologie et/ou d'activité catalytique. Les compositions contenant des teneurs plus élevées en C4 dans le copolymère (B) peuvent donner des problèmes de faible activité, de mauvaise morphologie, ou encore de maintien du réacteur en phase gazeuse. Des teneurs plus faibles en C4 dans les copolymères (A) et (B) peuvent conduire à une Tsc trop élevée. Des teneurs plus élevées en C2 dans les copolymères (A) et (B) conduisent généralement à une température de fusion trop basse et une teneur en fractions solubles dans des solvants organiques trop élevée pour l'application de feuilles destinées à l'emballage alimentaire.

Les copolymères (A) utilisables dans les compositions selon l'invention conduisent à une Tsc très basse. En outre, ils peuvent être obtenus dans des conditions de polymérisation techniquement et économiquement acceptables.

Les compositions à base de polymère du propylène particulièrement préférées comprennent au moins 40 % en poids, plus particulièrement au moins 45 % en poids de copolymère (A). Avantageusement, les compositions comprennent au plus 67 % en poids de copolymère (A). Les compositions à base de polymère du propylène comprenant de 45 à 67 % en poids de copolymère (A) sont particulièrement préférées.

Le copolymère (A) est de préférence tel que la quantité de C4 est d'au moins 16 % en poids par rapport audit copolymère (A). Des quantités d'au plus 24 % en poids permettent d'obtenir des compositions ayant un bon compromis entre la température de fusion et la Tsc.

Le copolymère (A) peut contenir jusqu'à 0,5 % en poids de C2. Cette faible teneur en C2 améliore l'aptitude à l'impression des feuilles fabriquées à partir des compositions. De préférence la quantité de C2 contenue dans le copolymère (A) est d'au plus 0,3 % en poids. Les copolymères (A) ne contenant pas de C2 conduisent à de bonnes propriétés optiques.

La quantité de copolymère (B) présente dans les compositions selon l'invention est de préférence d'au moins 33 % en poids. Avantageusement, les compositions comprennent au plus 60 % en poids, plus particulièrement au plus 55 % en poids de copolymère (B). Les compositions à base de polymère du propylène comprenant de 33 à 55 % en poids de copolymère (B) sont particulièrement préférées.

Le copolymère (B) contient de préférence au moins 38 % en poids de C4. On obtient de bons résultats lorsque la quantité de C4 dans le copolymère (B) est d'au plus 50 % en poids. Le copolymère (B) peut également contenir de 0 à 1 % en poids de C2. Avantageusement, la teneur en C2 dans le copolymère (B) est d'au plus 0,5 % en poids. Les copolymères (B) ne contenant pas de C2 conviennent particulièrement bien et conduisent à des compositions ayant un compromis optimal entre la température de fusion et la Tsc.

Les compositions à base de polymère du propylène qui donnent des résultats particulièrement bons comprennent
- de 45 à 67 % en poids d'un copolymère propylène/1-butène(A) contenant essentiellement de 84 à 76 % en poids d'unités monomériques dérivées du propylène et de 16 à 24 % en poids d'unités monomériques dérivées du 1-butène par rapport au poids total du copolymère (A) et,
- de 33 à 55 % en poids d'un copolymère statistique du propylène (B) contenant de 38 à 50 % en poids d'unités monomériques dérivées du 1-butène et de 0 à 0,5 % en poids d'unités monomériques dérivées de l'éthylène par rapport au poids total du copolymère (B).

Les compositions selon la présente invention peuvent contenir des additifs usuels tels que des anti-oxydants, des anti-acides, des anti-UV, des colorants, des matières de charge, des agents antistatiques, des agents lubrifiants et des agents favorisant le glissement. Ils sont généralement ajoutés par mélange à l'état fondu, par exemple lors de la fabrication de granules à partir des compositions selon l'invention. Le MFI des compositions selon l'invention peut également, si nécessaire, être ajusté par mélange de préférence à l'état fondu, avec par exemple un peroxyde. La teneur totale en additifs ne dépasse généralement pas 5 % en poids par rapport au poids total de la composition selon l'invention. De préférence elle ne dépasse pas 2 % en poids. Généralement, les polymères (A) et (B) constituent au moins 95 % en poids, de préférence au moins 98 % en poids, par rapport au poids total des compositions. Avantageusement, les compositions ne comprennent pas d'autres polymères que les polymères (A) et (B).

Les compositions selon l'invention présentent généralement de bonnes propriétés optiques. Le trouble des compositions selon l'invention est le plus souvent d'au plus 1,6 %, plus particulièrement d'au plus 1,3 %. Le trouble est déterminé sur des films coextrudés et biorientés obtenus comme décrit ci-avant, et est mesuré selon la nonne ASTM D 1003. Généralement, la transparence des compositions selon l'invention mesurée selon la norme ASTM D 1746 sur des films coextrudés et biorientés obtenus comme décrit ci-avant est d'au moins 75 %, plus particulièrement d'au moins 78 %. Le plus souvent, cette transparence est d'au plus 100 %. La brillance mesurée selon la norme ASTM D 2457 à 45° sur des films coextrudés et biorientés obtenus comme décrit ci-avant, est le plus souvent d'au moins 80 %, plus particulièrement d'au moins 85 %. Généralement, cette brillance est d'au plus 100 %.

Les compositions selon l'invention présentent généralement un indice de fluidité en fondu (MFI), mesuré selon la norme ASTM D 1238 (230°C; charge : 2,16 kg) d'au moins 0,5 g/10 min, de préférence d'au moins 1 g/10 min. Les valeurs de MF1 sont le plus souvent d'au plus 20 g/10 min, de préférence d'au plus 15 g/10 min. Des valeurs de MFI d'au plus 10 g/10 min sont particulièrement préférées.

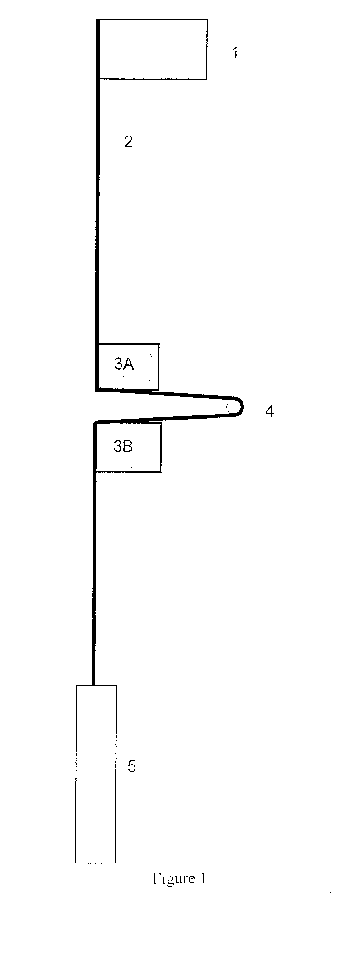

La plage de hot tack des compositions selon l'invention est le plus souvent de 85 à 145°C, et plus particulièrement de 90 à 140°C. La plage de «hot tack » est déterminée à l'aide du dispositif représenté à la figure 1 qui comprend un dispositif- 1 - permettant de fixer, dans le sens de la longueur, une bandelette de film - 2 - au-dessus d'une soudeuse OTTO BRUGGER HSG/C - 3 - à deux mâchoires de 1 cm de large- 3A et 3B -, une tige - 4 - permettant d'introduire la bandelette entre les deux mâchoires et un poids - 5 - de 63,3 g destiné à être attaché à l'autre extrémité de la bandelette. La distance entre le poids et la mâchoire inférieure est de 8 cm, la distance de déplacement latéral du film lors de l'introduction entre les mâchoires de la soudeuse est de 3 cm, la distance entre le point de fixation du film et la mâchoire supérieure est de 11 cm. La plage de «hot tack » est mesurée comme suit : une bandelette de 4 cm de large et de 29,5 cm de long d'un film coextrudé et biorienté de 25 µm d'épaisseur obtenu selon la méthode décrite ci-avant en rapport avec la mesure de 1a Tsc, fixée par une extrémité au dispositif -1 - et par l'autre au poids - 5 -, est introduite à l'aide de la tige - 4 - entre les deux mâchoires de la soudeuse - 3 - qui se ferment ensuite pendant 0,5 s avec une pression de 5 bars. A l'ouverture des mâchoires, on mesure le pourcentage de soudure restée intacte. Cette mesure est effectuée à différentes températures entre 70 et 160 °C avec une fréquence de 5 °C et la plage de «hot tack » est définie comme étant la plage de températures dans laquelle on observe au moins 80 % de la soudure restée intacte après ouverture des mâchoires.

La température de fusion (Tf) des compositions, mesurée par calorimétrie différentielle à balayage (DSC) selon la norme ASTM D 3418, est avantageusement d'au moins 100 °C, plus particulièrement d'au moins 110 °C. Les compositions ayant une Tf inférieure à 100 °C peuvent donner des problèmes de collage. La Tf de ces compositions est le plus souvent d'au plus 132 °C et plus particulièrement d'au plus 130 °C. Les compositions ayant une Tf supérieure à 132 °C ne permettent pas le scellage à très basse température. Des compositions ayant une Tf de 115 à 128 °C sont tout particulièrement préférées parce qu'elles permettent la fabrication des films BOPP, pouvant être utilisés sur des machines d'emballage à haute cadence et ne donnent pas de collage des emballages lors du stockage.

Les polymères du propylène utilisés dans les compositions selon l'invention peuvent être obtenus selon toute technique connue à cet effet.

De manière particulièrement avantageuse, on prépare le polymère du propylène utilisé dans les compositions selon l'invention par polymérisation dans au moins deux étapes successives. Chacune de ces étapes peut être effectuée dans le même milieu de polymérisation ou dans des milieux de polymérisation différents. Dans le cas des compositions à base de polymère du propylène comprenant les copolymères (A) et (B), ces copolymères (A) et (B) sont de préférence préparés dans deux étapes de polymérisations successives, un des copolymères étant préparé au cours d'une première étape et l'autre copolymère étant préparé, en présence du premier, au cours d'une étape de polymérisation ultérieure. De préférence, on procède d'abord à la préparation du copolymère (A) et ensuite à la préparation du copolymère (B) en présence du copolymère (A) issu de la première étape. Un mode particulièrement préféré de préparation du polymère du propylène utilisé dans les compositions consiste à synthétiser successivement le copolymère (A) puis le copolymère (B) en présence du copolymère (A) par polymérisation en phase gazeuse, dans des réacteurs successifs interconnectés fonctionnant en lit agité ou de préférence en lit fluidisé. Cette dernière variante ne donne aucun problème d'agglomération et mène à une excellente granulométrie du polymère du propylène utilisé dans les compositions selon l'invention, de manière que généralement au plus 10 % en poids des particules du polymère du propylène ont une taille d'au moins 2000 µm, plus particulièrement au plus 20 % en poids des particules ont une taille d'au moins 1000 µm. Le plus souvent, la répartition granulométrique du polymère du propylène utilisé dans les compositions selon l'invention est telle qu'au plus 30 % en poids de particules ont une taille d'au moins 710 µm. La répartition granulométrique du polymère du propylène utilisé dans les compositions selon l'invention a été déterminée par tamisage selon la norme ASTM D1921. La bonne morphologie du polymère du propylène utilisé dans les compositions selon l'invention évite des problèmes de déchargement du réacteur de polymérisation et des problèmes d'alimentation des extrudeuses lors de la fabrication de granules à partir de ces compositions.

Le polymère du propylène utilisé dans la composition selon l'invention peut être obtenu au moyen de n'importe quel système catalytique connu suffisamment actif et productif.

Les systèmes catalytiques préférés pour préparer les compositions selon l'invention comprennent
- un solide catalytique comprenant à titre de composants essentiels du magnésium, du titane et du chlore,
- un composé organoaluminique, de préférence un trialkylaluminium, tout particulièrement le triéthylaluminium,
- un composé électrodonneur (électrodonneur externe) choisi généralement parmi les alkoxysilanes de formule R¹ₙSi(OR²)₄₋ₙ dans laquelle R¹ représente un groupe hydrocarboné contenant de 1 à 12 atomes de carbone, R² représente un groupement hydrocarboné contenant de 1 à 8 atomes de carbone et n est 1, 2 ou 3.

Les alkoxysilanes préférés à titre d'électrodonneur externe sont les alkylalkoxy- et cycloalkylalkoxysilanes, et parmi ces derniers les di- et triméthoxysilanes sont tout particulièrement préférés. Le n-propyltriméthoxysilane, le dicyclopentyldiméthoxysilane et le cyclohexylméthyldiméthoxysilane donnent de particulièrement bons résultats.

Les solides catalytiques utilisables selon l'invention sont bien connus de l'homme du métier. Ils contiennent le plus souvent un composé électrodonneur (électrodonneur interne) choisi parmi les mono- et diesters d'acides carboxyliques aromatiques, de préférence parmi les phtalates de dialkyle, tout particulièrement le diisobutylphtalate. Les solides catalytiques utilisables selon la présente invention peuvent également contenir des quantités plus ou moins importantes de polymères préformés provenant d'une étape de prépolymérisation effectuée lors de la synthèse dudit solide ou lors d'une étape de polymérisation précédant directement la fabrication des compositions selon la présente invention.

Les divers constituants du système catalytique sont généralement mis en oeuvre de manière que le rapport atomique entre l'aluminium du composé organoaluminique et le titane du solide catalytique soit de 3 à 300, de préférence de 10 à 250 et tout particulièrement de 15 à 100. En outre le rapport molaire entre l'aluminium du composé organoaluminique et le composé électrodonneur est généralement de 0,5 à 60, de préférence de 1 à 50, tout particulièrement de 2 à 30.

Les autres conditions générales de polymérisation sont bien connues de l'homme du métier. La température est généralement de 20 à 150 °C, de préférence de 40 à 95 °C, tout particulièrement de 50 à 75 °C. La polymérisation est généralement effectuée à une pression supérieure à la pression atmosphérique, de préférence de 1 à 30 10⁵ Pa.

La masse moléculaire moyenne du polymère du propylène utilisé dans les compositions selon l'invention peut être réglée par l'addition d'un ou plusieurs agents de réglage connus de la masse moléculaire comme l'hydrogène, le diéthylzinc, les alcools, les éthers et les halogénures d'alkyle. L'hydrogène est le plus couramment utilisé.

Les quantités requises de monomères et d'agent de réglage de la masse moléculaire peuvent être introduits de manière continue ou discontinue dans le milieu de polymérisation.

Les compositions selon l'invention peuvent éventuellement être soumises à un ou plusieurs traitements connus avec de l'eau, un alcool et/ou un diluant hydrocarboné pour l'élimination des résidus catalytiques et/ou des fractions de bas poids moléculaire.

Les compositions selon l'invention conviennent particulièrement bien pour être utilisées pour la fabrication de feuilles thermoscellables et plus particulièrement pour la fabrication de feuilles multicouches dont elles constituent la ou les couches de scellage. Il est évident que plusieurs compositions selon l'invention peuvent être utilisées dans la ou les couches de scellage.

L'invention concerne dès lors également des feuilles multicouches comprenant au moins une couche de scellage substantiellement constituée d'une composition selon l'invention.

Les feuilles multicouches contiennent généralement une couche de base qui peut être constituée de n'importe quel matériau polymérique, en général d'un polymère cristallin d'α-oléfine. De préférence, la feuille de base est constituée substantiellement d'un polymère cristallin du propylène. Ce polymère cristallin du propylène peut aussi être un copolymère de propylène, d'éthylène et/ou de 1-butène, contenant en général moins de 8 % en poids de ces comonomères, de préférence moins de 5 % en poids. Il va de soi que les feuilles multicouches peuvent contenir, outre la feuille de base et la ou les couches de scellage comprenant les compositions selon l'invention, d'autre couches intermédiaires entre la feuille de base et la ou les couches de scellage.

Les feuilles multicouches selon l'invention peuvent être obtenues :
- en faisant adhérer entre elles, par pressage entre des rouleaux chauffés, une feuille de base préalablement façonnée et une ou plusieurs feuilles préalablement façonnées à partir des compositions selon l'invention;
- en revêtant une feuille de base au moyen d'une solution ou d'une dispersion comprenant les compositions selon l'invention dans un solvant organique pour laminer les compositions selon l'invention sur la feuille de base;
- en extrudant une couche comprenant les compositions selon l'invention en fondu pour la laminer sur la feuille de base;
- en extrudant séparément la ou les couches comprenant les compositions selon l'invention et la feuille de base et en joignant les extrudats fondus via une filière commune;
- en coextrudant la ou les couches comprenant les compositions selon l'invention et la feuille de base via une filière multicanaux.

L'épaisseur des feuilles multicouches selon l'invention est généralement de 5 à 300 µm, de préférence de 10 à 170 µm. L'épaisseur de la (des) couche(s) de scellage à base de la composition selon l'invention est généralement de 0,1 à 50 µm, de préférence de 0,5 à 30 µm. L'épaisseur de la feuille de base est généralement de 5 à 200 µm, de préférence de 10 à 70 µm.

Les feuilles multicouches selon l'invention peuvent être utilisées sans être étirées. De préférence elles sont étirées monoaxialement et plus particulièrement biaxialement, en vue de leur orientation, après revêtement de la feuille de base par la ou les couches comprenant les compositions selon l'invention. Cet étirage peut être effectué selon l'une des méthodes connues ci-après :
- on extrude une couche comprenant les compositions selon l'invention sur une feuille de base préformée et on étire biaxialement la feuille multicouche ainsi obtenue;
- on étire préalablement monoaxialement à chaud une feuille de base dans le sens longitudinal (sens "machine" (MD)) au moyen d'une série de rouleaux incluant un rouleau métallique, on extrude une couche de la composition selon l'invention sur cette feuille ainsi monoaxialement étirée et on étire la feuille multicouche ainsi obtenue dans le sens transversal (TD);
- on étire biaxialement (dans le sens longitudinal (MD) et dans le sens transversal (TD)) en deux étapes successives ou de manière simultanée, la feuille multicouche obtenue par extrusion, au travers d'une filière commune, de la ou les couches comprenant les compositions selon l'invention et de la feuille de base.

La dernière méthode est préférée.

Les feuilles multicouches ainsi obtenues sont appropriées à toutes les applications d'emballage. Elles sont avantageusement utilisées sur des machines d'emballage à haute cadence. Elles conviennent particulièrement bien pour les emballages alimentaires. L'invention concerne dès lors également un matériau d'emballage à base de feuilles multicouches selon l'invention.

Les exemples suivants servent à illustrer l'invention. Dans ces exemples, les MFI, les Tsc, les Tf, la répartition granulométrique, la plage de «hot tack», le trouble, la transparence et la brillance, sont mesurés comme décrit plus haut. Les teneurs en C4 du copolymère (A) et du polymère du propylène utilisé dans la composition sont déterminées par résonance magnétique nucléaire (RMN) et sont exprimées en % en poids. La teneur en C4 du copolymère (B) est déterminée à partir de la teneur en C4 du polymère du propylène utilisé dans la composition, la teneur en C4 du copolymère (A) et la teneur en copolymère (B). La teneur en copolymère (B) est déterminée à partir des résidus catalytiques du polymère du propylène utilisé dans la composition par rapport au copolymère (A). La teneur en C2 est déterminée par spectrométrie IR à transformée de FOURIER à partir des bandes d'absorption à 733 cm⁻¹ et à 720 cm⁻¹ et est exprimée en % en poids. La teneur en C3 est déterminée par bilan massique et exprimée également en % en poids.

### Exemple 1

On a préparé comme suit un polymère du propylène comprenant (pourcentages en poids) :
65 % d'un copolymère (A) et 35 % d'un copolymère (B). Le copolymère (A) contenait 82 % de C3 et 18 % de C4 et le copolymère (B) contenait 56 % de C3 et 44 % de C4. La teneur totale en C4 du polymère du propylène était de 27,1 %.

On a effectué la préparation successive de chacun des copolymères (A) et (B) dans un autoclave de 5 1 équipé d'un mobile d'agitation assurant l'homogénéisation du milieu gazeux de réaction et contenant de l'azote, du propylène, du 1-butène et de l'hydrogène. Le réglage automatique des monomères (C3 et C4) est effectué de manière à maintenir constante la pression totale de l'autoclave. La composition molaire de la phase gazeuse de l'autoclave de polymérisation, analysée via spectrométrie de masse, permet de régler les rapports molaires d'introduction entre le C3 et le C4 dans la phase gazeuse de l'autoclave.Un échantillon du copolymère (A) a été prélevé pour analyse.

Les conditions de polymérisation se trouvent dans le tableau 1 ci-dessous.

Le système catalytique, introduit sous argon dans le milieu de réaction, contenait :
- un solide catalytique comprenant 2.6 % en poids de Ti et 11 % en poids de diisobutylphtalate supporté sur du MgCl₂,
- du triéthylaluminium (TEAL), et
- du n-propyltriméthoxysilane.

Les caractéristiques du polymère du propylène ainsi obtenu se trouvent dans le tableau 1 ci-dessous.

Dans une extrudeuse APV 19TC25 (sous azote), on a granulé une composition constituée de :
- 100 parties en poids du polymère du propylène décrit ci-dessus;
- 0,05 partie en poids de stéarate de calcium;
- 0,05 partie en poids de dihydrotalcite;
- 0,201 partie en poids de stabilisant constitué d'un tiers en poids de pentaérythrityl tétrakis (3,5-di-tertiair-butyl-4-hydroxyphénylpropionate) et de deux tiers en poids de tris(2,4-di-tertiair-butyl-phényl)phosphite (IRGANOX® B215 de la firme CIBA SPECIALTY CHEMICALS);
- 0,101 partie en poids d'érucamide CRODAMIDE® ER de la firme CRODA;
- 0,126 partie en poids de silice SYLOBLOC® 45 de la firme GRACE DAVISON.

Les granules ainsi obtenus ont été utilisés pour la fabrication d'un film coulé non orienté dont la couche centrale d'une épaisseur de 962 µm est constituée d'un copolymère statistique du propylène contenant environ 0,45 % en poids d'éthylène et caractérisé par un MFI de 2,8 g/10 min, une couche extérieure d'une épaisseur de 25 µm est constituée de la composition décrite ci-dessus et l'autre couche extérieure opposée d'une épaisseur de 12 µm est constituée d'un terpolymère statistique ELTEX® P KS 300 commercialisé par la firme SOLVAY POLYOLEFINS EUROPE. Des échantillons de 8,5 x 8,5 cm² ont été prélevés dans le film coulé et biétirés sur un cadre de biorientation KARO® IV (5,5 fois dans le sens de la coextrusion et 8 fois dans le sens opposé) commercialisé par la firme BRUECKNER Maschinenbau GmbH. Les caractéristiques de la couche de scellage comprenant la composition selon l'invention du film BOPP ainsi obtenu se trouvent dans le tableau 2 ci-dessous. Il est à noter que la brillance a été mesurée sur la face du film biorienté contenant la composition.

### Exemple 2

On a préparé comme suit un polymère du propylène comprenant (pourcentages en poids) :
55 % d'un copolymère (A) et 45 % d'un copolymère (B). Le copolymère (A) contenait 82 % de C3 et 18 % de C4 et le copolymère (B) contenait 61 % de C3 et 39 % de C4. La teneur totale en C4 du polymère du propylène était de 27,5 %.

On a effectué la préparation successive de chacun des copolymères (A) et
(B) selon les conditions générales mentionnées à l'exemple 1. Les conditions de polymérisation se trouvent dans le tableau 1.

Ce polymère du propylène a été granulé dans les conditions décrites à l'exemple 1. La composition ainsi obtenue dont le MFI était de 3,2 g/10 min a été utilisée pour la fabrication d'un film BOPP comme décrit à l'exemple 1, et dont la couche de scellage présentait les caractéristiques mentionnées dans le tableau 2.

### Exemple 3R

Cet exemple est donné à titre de comparaison.

On a préparé comme suit un polymère du propylène ne comprenant qu'un seul copolymère contenant (pourcentages en poids) : 81 % de C3 ; 18,4 % de C4, et 0,6 % de C2.

On a effectué la préparation de ce copolymère dans un réacteur à lits fluidisés, équipé d'une grille de distribution des gaz et fonctionnant en continu. On a fait circuler à travers de ce réacteur, via un compresseur, en concentration stationnaire stable, une navette gazeuse contenant l'azote, du propylène, du 1-butène, de l'éthylène et de l'hydrogène.

Les conditions de polymérisation et les caractéristiques du copolymère ainsi obtenu se trouvent dans le tableau 1.

Ce copolymère a été granulé dans les conditions décrites à l'exemple 1, sauf que la quantité nécessaire de 2,5-diméthyl-2,5-di(tertiair butyl peroxy)hexane a été ajoutée afin d'obtenir des granules dont le MFI était de 7,1 g/10 min. Les granules ainsi obtenus ont été utilisés pour la fabrication d'un film BOPP comme décrit à l'exemple 1, et dont la couche de scellage présentait les caractéristiques mentionnées dans le tableau 2.

La Tsc relativement élevée de cette composition est un handicap pour sa mise en oeuvre comme film thermoscellable sur les machines d'emballage à très haute cadence.

**Tableau 1**

| | Unité | Ex.1 | Ex. 2 | Ex. 3R |
|---|---|---|---|---|
| Copolymère (A) | % poids | 65 | 55 | 100 |
| Conditions de polymérisation de (A) | | | | |
| H2/C3 | % mole/mole | 0,3 | 0,3 | 1,1 |
| C4/C3 | % mole/mole | 27 | 27 | 30,2 |
| Température | °C | 70 | 70 | 60 |
| Al/Ti | Mole/mole | 35 | 35 | 50 |
| Al/Si | Mole/mole | 5 | 5 | 3,5 |
| Temps de séjour | Heure | 1 | 1 | 2 |
| Caractéristiques du copolymère (A) | | | | |
| C2 | %poids | 0 | 0 | 0,6 |
| C4 | % poids | 18 | 18 | 18,4 |
| (B) | % poids | 35 | 45 | 0 |
| Conditions de polymérisation de (B) | | | | - |
| H2/C3 | % mole/mole | 0,8 | 0,8 | - |
| C4/C3 | % mole/mole | 75 | 75 | - |
| Température | °C | 70 | 70 | - |
| Al/Ti | Mole/mole | 35 | 35 | - |
| Al/Si | Mole/mole | 5 | 5 | - |
| Temps de séjour | Heure | 1 | 2 | - |
| Caractéristiques du copolymère (B) | | | | |
| C4 | % poids | 44 | 39 | - |
| Polymère du propylène utilisé dans la composition | | | | |
| C2 | % poids | 0 | 0 | 0,6 |
| C4 | % poids | 27,1 | 27,5 | 18,4 |
| Tf | °C | 122 | 122,7 | 116,8 |
| MFI | g/10 min | 3,3 | 3,2 | 3,5 |
| Passant cumulé 2000 µm(*) | % poids | 100 | - | - |
| Passant cumulé 1000 µm(*) | % poids | 87,4 | - | - |
| Passant cumulé 710 µm(*) | % poids | 79,7 | - | - |

| | | | | |
|---|---|---|---|---|
| (^{*}) ouverture des mailles du tamis | | | | |

**Tableau 2**

| | Unité | Ex.1 | Ex. 2 | Ex. 3R |
|---|---|---|---|---|
| Couche de scellage comprenant la composition | | | | |
| MFI | g/10 min | 3,3 | 3,2 | 7,1 |
| Tsc | °C | 79 | 77 | 92 |
| Plage hot tack | °C-°C | 85-147 | 79-146 | 89-139 |
| Trouble | % | 1 | 1 | 1 |
| Brillance | % | 93 | 92 | 92 |
| Transparence | % | 81 | 80 | 80 |

## Revendications

1. Compositions à base de polymère du propylène ayant une température de scellage inférieure à 80°C, ledit polymère du propylène contenant moins de 1 % en poids d'unités monomériques dérivées de l'éthylène par rapport au poids total du polymère du propylène.

2. Compositions à base de polymère du propylène selon la revendication 1 comprenant :
- de 35 à 68 % en poids d'un copolymère statistique du propylène (copolymère ( A )) contenant de 14 à 30 % en poids d'unités monomériques dérivées du 1-butène et de 0 à 0,5 % en poids d'unités monomériques dérivées de l'éthylène par rapport au poids total du copolymère (A), et
- de 65 à 32 % en poids d'un copolymère statistique du propylène (copolymère ( B)) contenant de 35 à 55 % en poids d'unités monomériques dérivées du 1-butène et de 0 à 1 % en poids d'unités monomériques dérivées de l'éthylène par rapport au poids total du copolymère (B).

3. Compositions à base de polymère du propylène selon la revendication 2, comprenant :
- de 45 à 67 % en poids d'un copolymère propylène/1-butène(A) contenant essentiellement de 84 à 76 % en poids d'unités monomériques dérivées du propylène et de 16 à 24 % en poids d'unités monomériques dérivées du 1-butène par rapport au poids total du copolymère (A) et,
- de 33 à 55 % en poids d'un copolymère statistique du propylène (B) contenant de 38 à 50 % en poids d'unités monomériques dérivées du 1-butène et de 0 à 0,5 % en poids d'unités monomériques dérivées de l'éthylène par rapport au poids total du copolymère (B).

4. Compositions selon l'une quelconque des revendications 1 à 3, présentant un trouble, mesuré selon la nonne ASTM D 1003, d'au plus 1,6 %.

5. Compositions selon l'une quelconque des revendications 1 à 4, présentant un indice de fluidité en fondu (MFI), mesuré selon la norme ASTM D 1238 (230°C; charge : 2,16 kg) d'au moins 1 g/10 min et ne dépassant pas 10 g/10 min.

6. Compositions selon l'une quelconque des revendications 1 à 5, présentant une plage de hot tack de 90 à 140°C.

7. Compositions selon l'une quelconque des revendications 1 à 6, susceptibles d'être obtenues par polymérisation dans au moins deux étapes successives.

8. Feuilles multicouches thermoscellables **caractérisées en ce qu'**elles comportent au moins une couche de scellage substantiellement constituée d'une composition selon l'une quelconque des revendications 1 à 7.

9. Matériau d'emballage à base de feuilles selon la revendication 8.
